# EUROPÄISCHE PATENTSCHRIFT

(11) **EP 3 431 815 B1**
(45) Veröffentlichungstag und Bekanntmachung des Hinweises auf die Patenterteilung: **07.10.2020**
(21) Anmeldenummer: 18182163.8
(22) Anmeldetag: 06.07.2018
(51) Int. Cl.: F16H 7/12

(54) **RIEMENSPANNVORRICHTUNG**
BELT TENSIONING DEVICE
DISPOSITIF DE TENSION DE COURROIE

(30) Priorität: 17.07.2017 DE 102017116000
(43) Veröffentlichungstag der Anmeldung: 23.01.2019
(73) Patentinhaber: Muhr und Bender KG, 57439 Attendorn (DE)
(72) Erfinder: Stadermann, Florian, 57439 Attendorn (DE); Jud, Joachim, 57567 Daaden (DE); Pfeifer, Simon, 58840 Plettenberg (DE); Jung, Manfred, 56457 Westerburg (DE)
(74) Vertreter: Neumann Müller Oberwalleney & Partner Patentanwälte

(56) Entgegenhaltungen:
- EP-A1- 3 023 670
- EP-A2- 2 128 489
- DE-A1-102015 222 203
- DE-B3-102011 084 680

## Beschreibung

Die Erfindung betrifft eine Riemenspannvorrichtung für einen Riementrieb mit riemengetriebenen Starter-Generator. Ein Riementrieb umfasst üblicherweise einen endlosen Riemen und zumindest zwei Riemenscheiben, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Aus der EP 2 128 489 A2 ist eine Riemenspannvorrichtung für einen Riementrieb mit Starter-Generator bekannt. Die Riemenspannvorrichtung weist ein Gehäuse auf, in dem zwei Spannarme um eine Schwenkachse schwenkbar gelagert sind. Die Spannarme sind mit Federmitteln gegeneinander abgestützt. Das Gehäuse ist bei an den Starter-Generator montierter Antriebsriemenscheibe dadurch montierbar, dass das Gehäuse in einem die Antriebswelle des Starter-Generators umgebenden Ringbereich berührungsfrei gegenüber dem Starter-Generator ist.

Aus der EP 2 778 472 A1 ist eine ähnliche Riemenspannvorrichtung mit zwei Spannarmen bekannt, die über eine Feder in Umfangsrichtung gegeneinander abgestützt sind. Die Feder hat eine Anzahl von mindestens 1,25 und maximal 2,5 Windungen. Hierdurch wird ein kurzer axialer Bauraum erreicht.

Aus der WO 2014/100894 A1 ist eine Riemenspannvorrichtung mit einem Grundkörper, einem hieran drehbar gelagerten ersten Spannarm sowie einem an dem ersten Spannarm schwenkbar gelagerten zweiten Spannarm bekannt. Es ist eine Dämpfungsstruktur vorgesehen, um den ersten Spannarm gegenüber dem Grundkörper zu dämpfen. Die Dämpfungsstruktur umfasst in einer Ausführungsform eine Tellerfeder, die zwischen dem ersten Spannarm und dem Grundkörper mit axialer Vorspannung angeordnet ist. In einer anderen Ausführungsform sind eine erste und zweite Ringbuchse vorgesehen, die axial vorspannbar sind, um eine Drehbewegung des ersten Spannarms gegenüber dem Gehäuse zu dämpfen.

Der vorliegenden Erfindung liegt die Aufgabe zugrunde, eine Riemenspannvorrichtung vorzuschlagen, die geringe Lagetoleranzen und gute Dämpfungseigenschaften aufweist.

Zur Lösung wird eine Riemenspannvorrichtung vorgeschlagen, die die Merkmale des Anspruchs 1 umfasst.

Ein Vorteil dieser Riemenspannvorrichtung ist, dass die radial wirkenden Vorspannmittel keinen nachteiligen Einfluss auf die Lagerung und Führung der am Grundkörper schwenkbar gelagerten Spannarme haben. Die Anordnung zwischen Grundkörper, Lagerbuchse und hierauf schwenkbar gelagertem Spannarm ist aufgrund der radialen Vorspannkraft radial spielfrei. Insgesamt werden auf diese Weise gute Dämpfungseigenschaften bei gleichzeitig geringen Lagetoleranzen für die Spannarme erreicht. Durch geeignete Auswahl und Ausgestaltung der Vorspannmittel können die gewünschten Dämpfungseigenschaften der Riemenspannvorrichtung nach Bedarf angepasst werden, insbesondere auf die im Start-, Boost- beziehungsweise Rekuperationsbetrieb gewünschten Eigenschaften.

Der Aufbau und das Wirkprinzip sind allgemein so, dass die drei Bauteile Grundkörper, Lagerbuchse und Spannarm koaxial ineinander angeordnet sind, wobei die Lagerbuchse mit einem von den beiden Teilen, Grundkörper oder Spannarm, drehfest verbunden und gegenüber dem andern der genannten Teile, Spannarm oder Grundkörper, drehbar ist. Die Vorspannmittel sind radial zwischen den beiden drehfest miteinander verbundenen Bauteilen wirksam angeordnet und beaufschlagen die radial-elastische Lagerbuchse radial in Richtung zum relativ hierzu drehbaren Bauteil.

Die Lagerbuchse kann mehrere über den Umfang verteilte, sich in axiale Richtung erstreckende Schlitze beziehungsweise mäanderartige Stegabschnitte aufweisen. Die über den Umfang verteilten Schlitze beziehungsweise mäanderartigen Stegabschnitte ermöglichen, dass die Lagerbuchse radial aufgeweitet oder verkleinert werden kann. Durch die radial-elastische Verformbarkeit werden die von den Vorspannmitteln eingeleiteten Radialkräfte in radiale Richtung auf das hierzu drehbare Bauteil übertragen, so dass eine spielfreie Lagerung zwischen Spannarm und Grundkörper hergestellt ist.

Die Lagerbuchse kann beispielsweise ein Kunststoffteil sein, insbesondere ein aus Polyamid hergestelltes Kunststoffteil. Die Lagerbuchse kann mit einer reibungsmindernden Beschichtung, beispielsweise aus Polytetrafluoräthylen (PTFE) beschichtet sein.

Der Grundkörper kann beispielsweise aus einem metallischen Werkstoff, beispielsweise als Leichtmetallgussbauteil oder in Form eines Blechformteils aus Stahlblech hergestellt sein, wobei die Herstellung aus Kunststoff, insbesondere faserverstärkten Kunststoff ebenso denkbar ist.

Der erste und/oder zweite Spannarm können aus einem metallischen Werkstoff, insbesondere einem Stahlwerkstoff oder Leichtmetallguss hergestellt sein.

Die Vorspannmittel können prinzipiell beliebig gestaltet sein. Es sind alle Elemente denkbar, mit denen eine radial wirkende Vorspannkraft auf die Lagerbuchse erzeugt werden kann. Nach einer möglichen Ausführungsform umfassen die Vorspannmittel zumindest ein Federelement, das sich in Umfangsrichtung zwischen der Lagerbuchse und dem hiermit drehfest verbundenen Teil erstreckt, insbesondere um eine Umfangserstreckung von mindestens 30° und/oder höchstens 90°. Die Umfangserstreckung eines Federelements kann beispielsweise auch mindestens 10° und/oder höchstens 30° in Bezug um die Schwenkachse betragen. Das Federelement kann insbesondere als Blattfeder gestaltet sein.

Durch entsprechende Auswahl der Anzahl, Stärke und/oder Anordnung der Federelemente kann die Dämpfungskraft bedarfsgerecht ausgelegt werden. Bei größerer gewünschter Dämpfung können zwei oder mehr Federelement über den Umfang verteilt angeordnet werden. Vorzugsweise werden die Federelemente dabei so angeordnet, dass die von den Federelementen generierten Radialkräfte einander zumindest teilweise aufheben. Ein günstiger Kompromiss hinsichtlich Fertigungs- und Montageaufwand einerseits und guter radialer Vorspannung andererseits ist die Verwendung von zwei Federelementen, die einander vorzugsweise zumindest etwa diametral gegenüberliegend angeordnet sind, beispielsweise um 180° ± 10°. Bei Verwendung mehrerer Federelemente sind diese vorzugsweise untereinander gleich gestaltet. Die Federelemente können beispielsweise in Form von Blattfedern oder Wellfedern gestaltet sein, wobei prinzipiell auch andere elastische Elemente wie Gummielemente denkbar sind.

Das mindestens eine Federelement kann in unmontiertem Zustand eine Krümmung aufweisen, die von der Krümmung der Stützfläche der Lagerbuchse beziehungsweise des hiermit drehfest verbundenen Teils (Spannarm oder Grundkörper) abweicht. Nach einer ersten Möglichkeit kann das Federelement eine größere Krümmung aufweisen als die Stützfläche, wobei insbesondere auch eine gerade Ausgestaltung mit umfasst ist. Alternativ hierzu kann das Federelement auch eine kleinere Krümmung aufweisen als die Stützfläche. Durch die von der Stützfläche abweichenden Krümmung wird von dem Federelement eine Radialkraft auf die in Umfangsrichtung radial-elastische Lagerbuchse ausgeübt. Die Lagerbuchse wird dadurch radial elastisch aufgeweitet und beaufschlagt das relativ hierzu drehbare Teil (Spannarm oder Grundkörper) in radiale Richtung und wirkt damit wie eine Bremse.

Für eine möglichst hohe und gleichmäßige Dämpfungskraft ist es günstig, wenn die Vorspannmittel eine möglichst große Kontaktfläche haben. Hierfür können die Vorspannmittel eine axiale Länge aufweisen, die mindestens der halben axialen Länge der Lagerbuchse entspricht.

Wie oben beschrieben, ist die Lagerbuchse mit einem der Teile, Grundkörper oder Spannarm, drehfest verbunden. Zur drehfesten Verbindung können insbesondere Formschlussmittel zwischen der Lagerbuchse und dem hiermit drehfest verbundenen Bauteil vorgesehen sein, die formschlüssig ineinander greifen. Die Formschlussmittel können beispielsweise einen sich in axiale Richtung erstreckenden Steg aufweisen, der in eine entsprechende sich in axiale Richtung erstreckende Nut formschlüssig eingreift, so dass die Lagerbuchse gegenüber dem Anschlussbauteil verdrehgesichert ist.

Damit das zumindest eine Federelement zuverlässig gehalten ist, kann in der Umfangsfläche des mit der Lagerbuchse drehfest verbundenen Teils je Federelement eine

Ausnehmung vorgesehen sein, in der jeweils ein Federelement aufgenommen ist. Dabei ist insbesondere vorgesehen, dass die Federelemente in Umfangsrichtung an Seitenflächen der Ausnehmung abgestützt sind. Nach einer möglichen ersten Ausführungsform ist die Lagerbuchse mit dem Grundkörper drehfest verbunden ist, und der erste Spannarm gegenüber der Lagerbuchse drehbar. In diesem Fall ist das zumindest eine Federelement am Grundkörper radial abgestützt und beaufschlagt die Lagerbuchse in Richtung Lagerring des Spannarms. Nach einer hierzu alternativen zweiten Ausführungsform ist die Lagerbuchse mit dem Spannarm drehfest verbunden ist, und die Baueinheit aus Lagerring und Spannarm ist gegenüber dem Grundkörper drehbar. In diesem Fall ist das zumindest eine Federelement am Spannarm radial abgestützt und beaufschlagt die Lagerbuchse in Richtung Hülsenansatz des Grundkörpers.

Nach einer Ausführungsform weist die Federanordnung zumindest eine Bügelfeder auf, die im Einbauzustand eine Umfangserstreckung um die Schwenkachsen der Spannarme von weniger als 360°, insbesondere von weniger als 330° aufweist. Die Bügelfeder hat an ihren Enden jeweils einen Stützabschnitt, mit dem die Feder an dem jeweiligen Spannarm in Umfangsrichtung abgestützt ist, um die beiden Spannarme gegeneinander zu beaufschlagen. Die Stützabschnitte können bogenförmig gestaltet sein und in einer entsprechenden Umfangsnut an dem Spannarm einsitzen, so dass die Feder in axialer Richtung und in Umfangsrichtung durch die Aufnahme in den beiden Umfangsnuten der beiden Spannarme fixiert ist. Zwischen den beiden Stützabschnitten liegt ein Federabschnitt, in dem beim elastischen Aufweiten der Feder potentielle Energie gespeichert wird. Der Federabschnitt, welcher auch als Bügelabschnitt bezeichnet werden kann, wird beim elastischen Aufweiten insbesondere auf Biegung beansprucht. Die zumindest eine Bügelfeder kann aus Runddraht oder Rechteckdraht hergestellt sein. Es können ein oder zwei Federn vorgesehen sein.

Der Grundkörper kann einen Befestigungsabschnitt zum Befestigen der Riemenspannvorrichtung an einem ortsfesten Bauteil, beispielsweise dem Aggregat oder Motorgehäuse aufweisen. Der Befestigungsabschnitt kann flanschartig von dem Hülsen- oder Ringabschnitt, durch den die Antriebswelle geführt ist, abstehen. Günstig ist es, wenn der Befestigungsabschnitt mehrere Befestigungspunkte hat, an denen der Grundkörper mit dem Aggregat verbunden werden kann.

Bevorzugte Ausführungsbeispiele werden nachstehend anhand der Zeichnungsfiguren erläutert. Hierin zeigt
- Figur 1: eine erfindungsgemäße Riemenspannvorrichtung in einer ersten Ausführungsform mit einer Biegefeder
A) in perspektivischer Explosionsdarstellung;
B) im Querschnitt;
C) im Halblängsschnitt;
- Figur 2: eine erfindungsgemäße Riemenspannvorrichtung in einer abgewandelten zweiten Ausführungsform mit einer Biegefeder
A) in perspektivischer Explosionsdarstellung;
B) im Querschnitt;
C) im Längsschnitt;
D) im Halblängsschnitt, in vergrößerter Darstellung;
- Figur 3: eine erfindungsgemäße Riemenspannvorrichtung in einer dritten Ausführungsform mit zwei Biegefedern
A) in perspektivischer Explosionsdarstellung;
B) im Querschnitt durch eine Schnittebene zwischen den Biegefedern;
C) im Längsschnitt;
- Figur 4: eine erfindungsgemäße Riemenspannvorrichtung in einer abgewandelten zweiten Ausführungsform mit einer Biegefeder
A) in perspektivischer Explosionsdarstellung;
B) im Querschnitt durch eine Schnittebene zwischen den Biegefedern;
C) im Halblängsschnitt;
D) im Halblängsschnitt, in vergrößerter Darstellung.

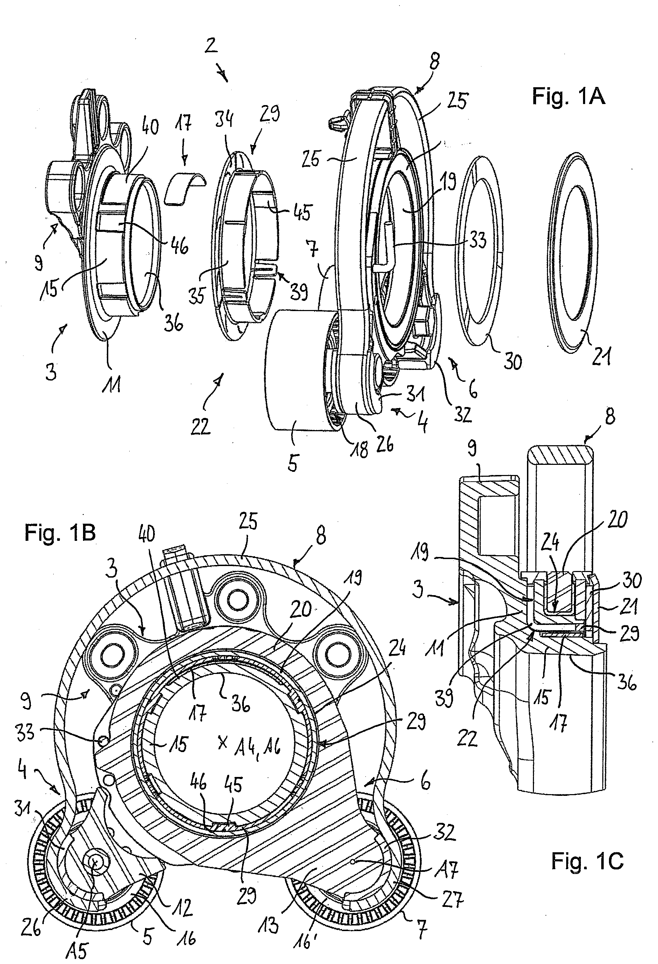

Die Figuren 1A bis 1C, die im Folgenden gemeinsam beschrieben werden, zeigen eine erfindungsgemäße Riemenspannvorrichtung 2 in einer ersten Ausführungsform. Die Riemenspannvorrichtung 2 umfasst einen Grundkörper 3, einen ersten Spannarm 4 mit einer ersten Spannrolle 5, einen zweiten Spannarm 6 mit einer zweiten Spannrolle 7 und eine Federanordnung 8, über welche die beiden Spannarme 4, 6 in Drehrichtung gegeneinander federnd abgestützt sind.

Der Grundkörper 3 kann an einem ortsfesten Bauteil wie einem Aggregat befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 3 einen Befestigungsabschnitt 9, mit insbesondere drei über den Umfang verteilten nach radial außen vorstehende Flanschvorsprüngen 10 mit Bohrungen, durch die Schrauben zur Befestigung an dem ortsfesten Bauteil durchgesteckt werden können. Die Riemenspannvorrichtung 2 gemäß der vorliegenden Ausführungsform ist so gestaltet, dass der Befestigungsabschnitt 9 des Grundkörpers 3, und die Spannrollen 5, 7 auf einer gemeinsamen Seite in Bezug auf die Lagerung 22, 23, 24 der Spannarme 4, 6 liegen.

Der Grundkörper 3 hat ferner einen radial innen an den Befestigungsabschnitt 9 anschließenden Flanschabschnitt 11, der zur axialen Abstützung des zweiten Spannarms 6 dient. Der Flanschabschnitt 11 geht radial innen in einen Hülsenabschnitt 15 über, an dem der erste beziehungsweise zweite Spannarm 4, 6 radial gelagert sind. Am freien Ende des Hülsenabschnitts 15 ist eine Ringscheibe 21 als Abschluss fixiert. Dies erfolgt vorliegend durch Umbördeln eines endseitigen Randes des Hülsenabschnitts 15, wobei andere Befestigungsmethoden ebenso denkbar sind. Die Ringscheibe 21 bildet eine Stützfläche zur axialen Abstützung des ersten beziehungsweise zweiten Spannarms 4, 6. Insgesamt bilden die Ringscheibe 21, der Hülsenabschnitt 15 und der Flanschabschnitt 11 eine im Halblängsschnitt etwa C-förmige Aufnahme für die beiden Spannarme 4, 6.

Der Grundkörper 3, der erste Spannarm 4 und der zweite Spannarm 6 sind vorliegend aus metallischen Material, wie Leichtmetallguss oder aus Stahl ausgeführt. Stahlbauteile haben den Vorteil einer hohen Festigkeit bei niedrigem Materialeinsatz, so dass insbesondere die Spannarme 4, 6 axial flach ausgeführt werden können. Die axiale Länge der beiden Spannarme 4, 6 ist im Bereich der Lagerung kürzer als die axiale Länge der Federanordnung 8.

Der erste Spannarm 4 ist mittels des ersten Lagers 22 um eine erste Schwenkachse A4 schwenkbar gelagert. Der zweite Spannarm 6 ist mittels des zweiten Lagers 24 um eine zweite Schwenkachse A6 schwenkbar gelagert. Vorliegend sind die beiden Lager 22, 24 koaxial zueinander angeordnet, das heißt die beiden Schwenkachsen A4, A6 fallen zusammen. Grundsätzlich ist es jedoch für bestimmte Anwendungen auch denkbar, dass die beiden Schwenkachsen parallel beziehungsweise exzentrisch zueinander angeordnet sein können. Die sich in Umfangsrichtung um die Schwenkachsen A4, A6 erstreckende Federanordnung 8 wirkt einer relativen Schwenkbewegung der beiden Spannarme 4, 6 entgegen. Die beiden Spannarme 4, 6 sind durch die zwischengeschaltete Federanordnung 8 relativ zueinander begrenzt drehbar und zusammen mit der Federanordnung 8 gegenüber dem Grundkörper um die Achsen A4, A6 frei drehbar, das heißt um 360° und mehr. Im an das ortsfeste Bauteil montierten Zustand ist diese freie Drehbarkeit nur insoweit gegeben wie es die Einbaulage zulässt. Es ist vorgesehen, dass die Schwenkachsen A4, A6 in montiertem Zustand der Riemenspannvorrichtung 2 innerhalb einer Öffnung 36 des Grundkörpers 3 liegen.

Die Spannarme 4, 6 haben jeweils einen Trägerabschnitt 12, 13, der von einem ringförmigen Lagerabschnitt 19, 20 des jeweiligen Spannarms 4, 6 nach radial außen vorsteht. An dem Trägerabschnitt 12, 13 ist jeweils eine zugehörige Spannrolle 5, 7 befestigt und mittels entsprechender Lager 18, 18' um zu den Schwenkachsen A4, A6 parallele Drehachsen A5, A7 drehbar gelagert. Das Lager 18 ist mittels einer Schraube 14 mit dem Trägerabschnitt verspannt. Die zweite Spannrolle 7 ist in analoger Form auf einem Lagerelement des zweiten Spannarms 6 drehbar gelagert und mittels einer Schraubverbindung 14' an dem Spannarm 6 befestigt. Scheiben 16, 16' verhindern das Eindringen von Schmutz in die Lager 18, 18' der Spannrollen 5, 7.

Im Folgenden wird näher auf die Lageranordnung der Riemenspannvorrichtung eingegangen, welche als Detail insbesondere in Figur 1C erkennbar ist. Der erste Spannarm 4 hat radial innen einen Lagerabschnitt 19 zur drehbaren Lagerung an dem Grundkörper 3. Der zweite Spannarm 5 hat einen Lagerabschnitt 20 zur drehbaren Lagerung relativ zum ersten Lagerabschnitt 19 beziehungsweise zum Grundkörper 3. Es ist erkennbar, dass der erste Lagerabschnitt 19 und der zweite Lagerabschnitt 20 axial und radial gegeneinander gelagert sind. Der erste Lagerabschnitt 19 ist im Halblängsschnitt etwa C-förmig gestaltet und mittels des ersten Lagers 22 an dem Grundkörper 3 drehbar gelagert. Der zweite Lagerabschnitt 20 ist im Schnitt etwa rechteckig gestaltet und sitzt in dem C-förmigen ersten Lagerabschnitt 19 drehbar ein.

Das erste Lager 22 umfasst eine im Querschnitt etwa L-förmigen Lagerbuchse 29, die eine axiale und radiale Lagerung für den ersten Spannarm 4 gegenüber dem Grundkörper 3 bildet, sowie eine mit der Lagerbuchse 29 verbundene Lagerscheibe 30, die den ersten Spannarm 4 in entgegengesetzter zweiter axialer Richtung gleitend lagert. Die L-förmige Lagerbuchse 29 und die Lagerscheibe 30 bilden gemeinsam einen etwa C-förmigen Lageraufnahmeraum, in dem die Lagerabschnitte 19, 20 der Spannarme 4, 5 aufgenommen sind. Das erste Lager 22 ist axial gegen die Ringscheibe 21 abgestützt, welche mit dem Hülsenabschnitt 15 fest verbunden ist. Die Lagerbuchse 29 sitzt auf dem Hülsenabschnitt 15 des Grundkörpers 3 und bildet ein Radiallager für den C-förmigen Ringabschnitt 19 des ersten Spannarms 4. Der zweite Lagerabschnitt 20 ist über ein zweites Lager 24, das insbesondere in Form eines C-förmigen Gleitrings gestaltet ist, in dem C-förmigen ersten Lagerabschnitt 19 axial und radial gelagert.

Die Montage kann derart erfolgen, dass die Lageranordnung bestehend aus zweitem Lager 24, zweitem Spannarm 6, Axiallager 23, erstem Spannarm 4 und erstem Lager 22 auf den Hülsenansatz 15 aufgeschoben wird. Dann wird die Ringscheibe 21 auf den Hülsenabschnitt 15 aufgeschoben und anschließend der endseitige Bund des Hülsenabschnitts 15 umgebördelt. In montiertem Zustand liegen die Spannarme 4, 6 axial zwischen dem Befestigungsabschnitt 11 und der Ringscheibe 21. Die axiale Länge des Grundkörpers 3 beziehungsweise des Hülsenabschnitts 15 ist kleiner als die Dreifache axiale Länge der Biegefeder 25, so dass der axiale Bauraum besonders gering ist. Zwischen den jeweils zueinander drehbaren Bauteilen 3, 4, 6, sind Ringdichtungen 41, 42 vorgesehen, welche ein ungewünschtes Eindringen von Schmutz in die Lager verhindern.

Eine Besonderheit der vorliegenden Ausführungsform ist, dass Vorspannmittel 17 vorgesehen sind, die radial zwischen einer Außenumfangsfläche des Grundkörpers 3 und einer Innenumfangsfläche der Lagerbuchse 29 angeordnet sind, um eine Radialkraft nach radial außen in Richtung dem relativ hierzu drehbaren Ringabschnitt 19 auszuüben. Die Lagerbuchse 29 ist beispielsweise ein Kunststoffteil, insbesondere ein aus Polyamid hergestelltes Kunststoffteil, das mit einer reibungsmindernden Beschichtung, beispielsweise aus Polytetrafluorethylen (PTFE) beschichtet sein kann.

Die Lagerbuchse 29 ist drehfest gegenüber dem Hülsenansatz 15 des Grundkörpers gehalten. Zur drehfesten Verbindung sind Formschlussmittel vorgesehen, die vorliegend mehrere radiale Vorsprünge 45 an der Innenumfangsfläche der Lagerbuchse 29 umfassen, die in entsprechende einseitig offene Ausnehmungen 46 beziehungsweise Nuten eingeschoben werden können, so dass die beiden Bauteile in Umfangsrichtung formschlüssig miteinander verbunden sind. Die Lagerbuchse 29 ist im Schnitt etwa L-förmig gestaltet und hat einen flanschförmigen Abschnitt 34, der gegen den Flanschabschnitt 11 des Grundkörpers 3 axial abgestützt ist und eine axiale Gleitlagerfläche für den Lagerring 19 des ersten Spannarms 4 bildet, sowie einen hülsenförmigen Abschnitt 35, der eine Umfangsgleitlagerfläche für den Lagerring 19 bildet.

Es ist insbesondere in Figur 1A erkennbar, dass die Lagerbuchse 29 mehrere über den Umfang verteilte, sich in axiale Richtung erstreckende Schlitze beziehungsweise mäanderartige Stegabschnitte 39 aufweisen. Die über den Umfang verteilten Schlitze beziehungsweise mäanderartigen Stegabschnitte 39 ermöglichen, dass die Lagerbuchse 29 radial aufgeweitet werden kann. Durch die radial-elastische Verformbarkeit werden die von den Vorspannmitteln 17 eingeleiteten Radialkräfte nach radial außen auf den Lagerring 19 des ersten Spannarms 4 übertragen, so dass eine spielfreie Lagerung zwischen Spannarm 4 und Grundkörper 3 gegeben ist.

Die Vorspannmittel 17 umfassen bei der vorliegenden Ausführungsform ein Federelement, das sich in Umfangsrichtung zwischen dem Hülsenabschnitt 15 des Grundkörpers 3 und hiermit drehfest verbundenen der Lagerbuchse 29 erstreckt. Durch entsprechende Ausgestaltung des Federelements 17, insbesondere Größe und Stärke kann die Dämpfungskraft bedarfsgerecht ausgelegt werden. Ein Federelement 17 kann sich beispielsweise über eine Umfangserstreckung von zwischen 30° und 90° in Bezug auf die Schwenkachse A4 erstrecken. Die axiale Länge eines Federelements 17 kann mindestens die halben axiale Länge der Lagerbuchse 29 betragen.

Anders als dargestellt, hat das Federelement 17 in unmontiertem Zustand eine Krümmung, die von der Krümmung der Stützfläche des Grundkörpers 3 abweicht. Es ist insbesondere vorgesehen, dass das Federelement als gerade Blattfeder gestaltet ist. Durch die von der Stützfläche abweichende Krümmung wird von dem Federelement 17 eine Radialkraft auf die in koaxial hierzu angeordnete radial-elastische Lagerbuchse 29 ausgeübt. Die Lagerbuchse 29 wird dadurch radial elastisch aufgeweitet und beaufschlagt den ringförmigen Lagerabschnitt 19 ersten Spannarms 4. Insofern haben die Vorspannmittel 17 im Zusammenwirken mit der Lagerbuchse 29 eine bremsende beziehungsweise dämpfende Wirkung auf den Spannarm 4. Vorspannmittel 17 und Lagerbuchse 29 können daher auch gemeinsam als Dämpfungsmittel bezeichnet werden.

Es ist insbesondere in Figur 1A erkennbar, dass das Federelement 17 in einer sich in Umfangsrichtung erstreckenden Ausnehmung 40 einsitzt. Die Umfangserstreckung der Ausnehmung 40 entspricht dabei der Umfangserstreckung des Federelements 17 in eingesetztem Zustand, so dass das Federelement 17 gegenüber dem Grundkörper 3 sicher gehalten ist.

Die Federanordnung 8 umfasst eine Bügelfeder 25, die mit einem ersten Stützabschnitt 26 an dem ersten Spannarm 4 und mit einem zweiten Stützabschnitt 27 an dem zweiten Spannarm in Umfangsrichtung abgestützt ist. Die Stützabschnitte 26, 27 bilden die Enden der Bügelfeder 25 und können daher auch als Endabschnitte bezeichnet werden. Die Endabschnitte sind bogenförmig gestaltet und greifen in entsprechende Umfangsnuten eines jeweils mit dem zugehörigen Spannarm 4, 6 verbundenen Stützelements 31, 32 ein. Die Stützelemente 31, 32 sind jeweils von unten auf das zugehörige Trägerelement 17 des Spannarms 4, 6 aufgesteckt. Durch den formschlüssigen Eingriff der Endabschnitte 26, 27 in den zugehörigen Stützelementen 31, 32 wird die Bügelfeder 25 in axialer Richtung und in Umfangsrichtung fixiert. Zwischen den beiden Stützabschnitten 26, 27 erstreckt sich der freie Federabschnitt der Bügelfeder 25, in dem beim Aufweiten der Feder potentielle Energie gespeichert wird. Die Bügelfeder 25 ist in Bezug auf eine sich zwischen den beiden Endabschnitte erstreckende Mittelebene spiegelsymmetrisch gestaltet.

Die Bügelfeder 25 hat eine Umfangserstreckung von weniger als 360° um die erste und zweite Schwenkachse A4, A6. Dabei ist ein mittlerer Radius des Federabschnitts der Bügelfeder 25 größer ist als ein größter Radius der ringförmigen Lagerabschnitte 19, 20 der beiden Spannarme 4, 6. Die axiale Gesamtlänge der Bügelfeder 25 ist größer ist als ringförmigen Lagerabschnitte 19, 20 der beiden Spannarme 4, 6, so dass ein insgesamt axial kompakter Aufbau gegeben ist. Die Bügelfeder ist bei der vorliegenden Ausführungsform aus Flachmaterial hergestellt. Mit Flachmaterial ist insbesondere gemeint, dass als Ausgangsmaterial ein Blechstreifen mit einem rechteckigen Querschnitt verwendet wird.

Die Bügelfeder 25 steht im Einbauzustand unter starker Druckvorspannung in Umfangsrichtung, das heißt die Feder ist gegenüber ihrem entspannten Zustand aufgeweitet, so dass die Feder die beiden Spannarme 4, 6 in Richtung aufeinander zu beaufschlagt. Zum (vorübergehenden) Fixieren der vorgespannten Stellung werden die Spannarme 4, 6 entgegen der Vorspannkraft der Feder voneinander weg bewegt und ein Sicherungsstift 33 in eine erste Bohrung im ersten Spannarm 4 eingesteckt, der gegen einen radialen Vorsprung am zweiten Spannarm 6 in Umfangsrichtung abgestützt ist. Nach dem Montieren der Riemenspannvorrichtung 2 an einem Aggregat und Auflegen des Riemens wird der Sicherungsstift 33 gezogen, so dass die Spannarme 4, 6 von der Bügelfeder 25 in Umfangsrichtung aufeinander zu beaufschlagt werden und die Spannrollen 5, 7 den Riemen vorspannen.

Der Grundkörper 3 beziehungsweise die Riemenspannvorrichtung 2 sind derart gestaltet, dass - in montiertem Zustand der Riemenspannvorrichtung 2 an ein Aggregat - die Schwenkachsen A4, A6 der Spannarme 4, 6 innerhalb des Außendurchmessers der Antriebswelle, insbesondere im Wesentlichen koaxial zur Antriebsdrehachse, angeordnet ist.

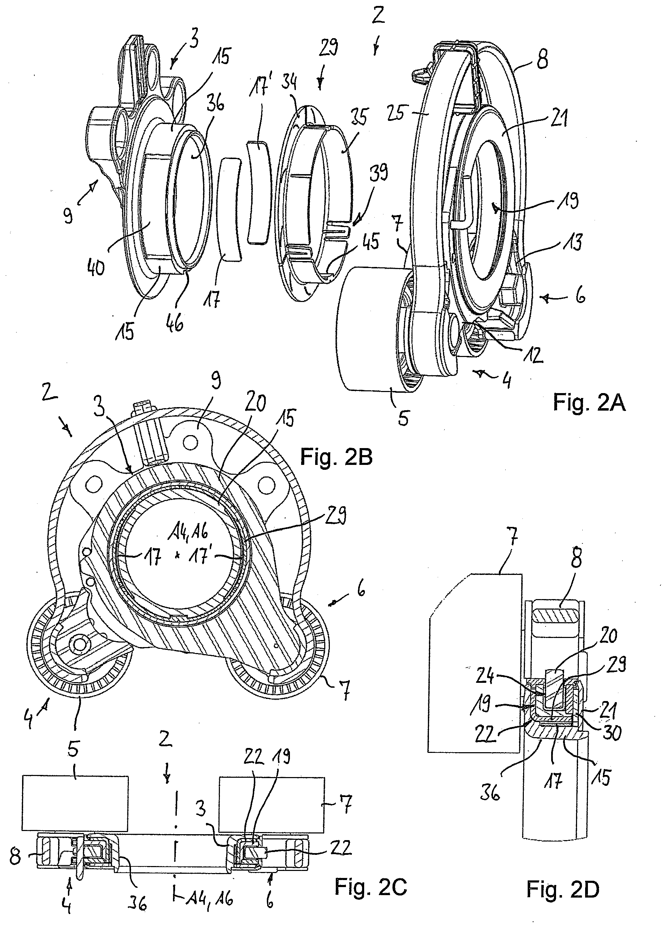

In den Figuren 2A bis 2D ist eine leicht abgewandelte zweite Ausführung der Riemenspannvorrichtung gezeigt, welche weitestgehend der Riemenspannvorrichtung aus Figur 1 entspricht, auf deren Beschreibung hinsichtlich der Gemeinsamkeiten insofern Bezug genommen wird. Dabei sind gleiche beziehungsweise abgewandelte Einzelheiten mit gleichen Bezugszeichen versehen wie in Figur 1.

Im Unterschied zur Ausführung nach Figur 1 umfassen die Vorspannmittel bei der Ausführung nach Figur 2 zwei Federelemente 17 17', die einander diametral gegenüberliegend angeordnet sind. Die beiden Federelemente 17, 17' erstrecken sich vorliegend über eine Umfangserstreckung von etwa 90° um die Schwenkachse A4, ohne hierauf eingeschränkt zu sein. Ein Vorteil der vorliegenden Ausführungsform ist, dass sich hiermit größere Radialkräfte erzeugen lassen, was zu einer größeren Dämpfungswirkung führt. Dadurch, dass die Federelemente 17, 17' einander entgegengesetzt gerichtet sind, wirken die Kräfte symmetrisch auf die Lagerbuchse 29. In der in Figur 2A gezeigten Explosionsdarstellung sind die Lagerscheibe 30 und die Abschlussscheibe 21 in bereits montiertem Zustand gezeigt.

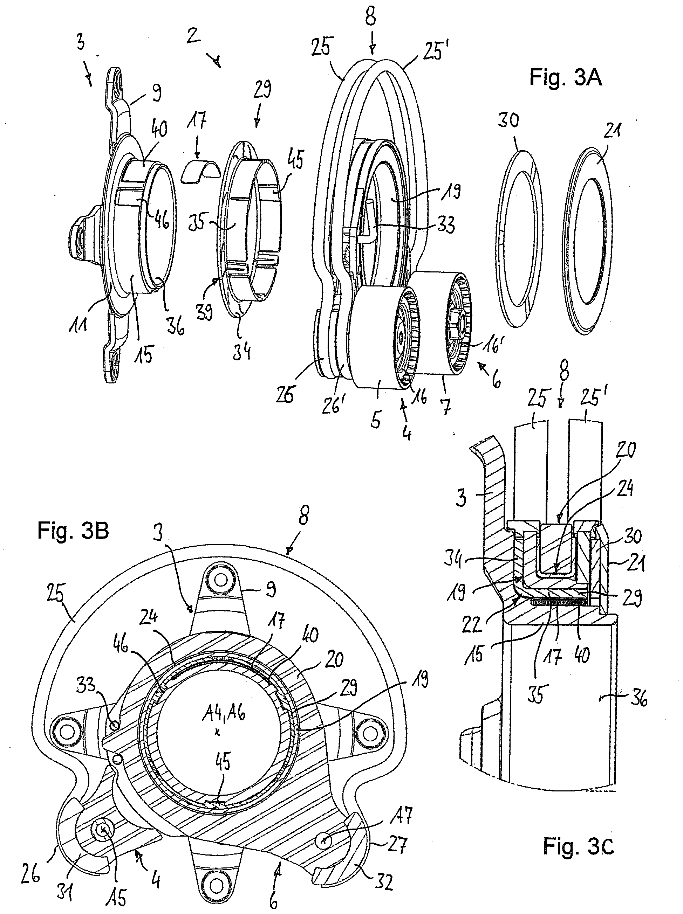

In den Figuren 3A bis 3C ist eine erfindungsgemäße Riemenspannvorrichtung 2 in einer weiteren Ausführungsform gezeigt. Die vorliegende Ausführungsform entspricht in weiten Teilen der Riemenspannvorrichtung aus Figur 1, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen wie in Figur 1.

Ein erster Unterscheid der vorliegenden Ausführungsform besteht darin, dass die Riemenspannvorrichtung 2 so gestaltet ist, dass die Lagerung 22, 24 der Spannarme 4, 6 am Grundkörper 3 axial zwischen dem Befestigungsabschnitt 9 des Grundkörpers 3 einerseits und einer Mittelebene der Spannrollen 5, 7 beziehungsweise des Riemens andererseits angeordnet ist. Als Riemenebene ist die Ebene definiert, welche durch die Riemenmitte in montiertem Zustand aufgespannt wird.

Ein weiterer Unterschied betrifft die Ausgestaltung der Federanordnung 8. Die Federanordnung 8 umfasst vorliegend zwei Bügelfedern 25, 25', die untereinander gleich gestaltet und parallel zueinander angeordnet sind. Die beiden Bügelfedern 25, 25' können mittels eines oder mehreren Befestigungselementen unter Ausbildung eines axialen Spalts miteinander verbunden werden. Die Endabschnitte 26, 27; 26', 27' sind in Stützelementen 31, 32 aufgenommen, welche jeweils zwei bogenförmige Nuten aufweisen. Die Stützelemente 31, 32 sind wie bei der Ausführungsform gemäß den Figuren 1 oder 2 mit dem jeweiligen Spannarm 4, 6 verbunden. Die beiden Bügelfedern 25, 25' sind vorliegend aus Rundmaterial hergestellt, das heißt sie haben einen runden Querschnitt über der Länge.

Bei der vorliegenden Ausführungsform gemäß Figur 3 umfassen die Vorspannmittel 17 ein Federelement, das sich in Umfangsrichtung zwischen dem Hülsenabschnitt 15 des Grundkörpers 3 und hiermit drehfest verbundenen der Lagerbuchse 29 erstreckt, wie bei der Ausführungsform nach Figur 1. Insofern wird hinsichtlich des Aufbaus und der Funktionsweise der Vorspannung beziehungsweise Dämpfung zur Vermeidung von Wiederholungen auf die obige Beschreibung Bezug genommen.

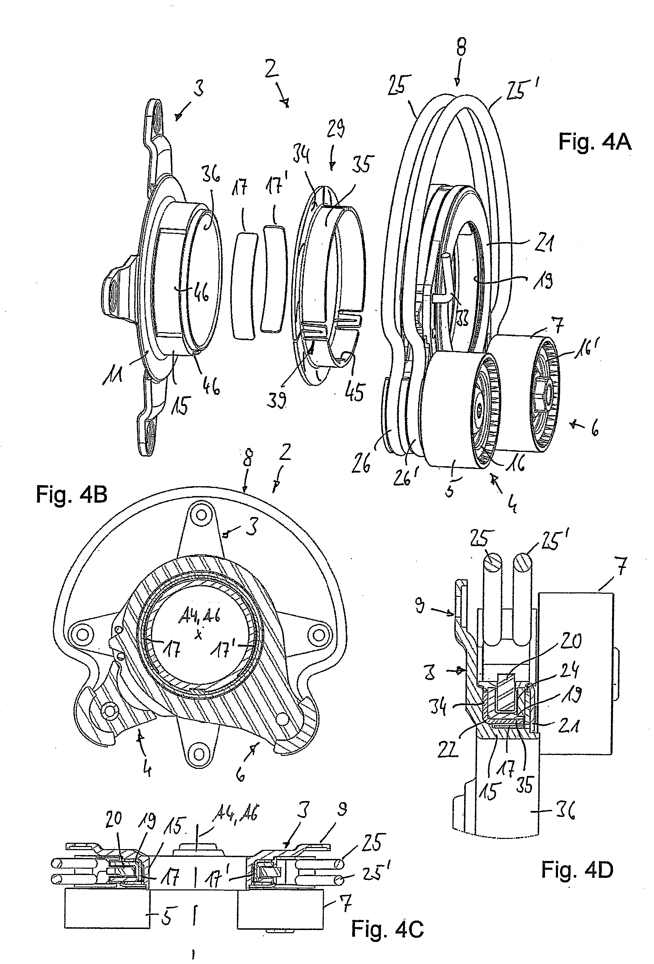

In den Figuren 4A bis 4D ist eine weitere Ausführung der erfindungsgemäßen Riemenspannvorrichtung 2 gezeigt. Diese entspricht weitestgehend der Riemenspannvorrichtung aus Figur 3, auf deren Beschreibung hinsichtlich der Gemeinsamkeiten insofern Bezug genommen wird. Dabei sind gleiche beziehungsweise einander entsprechende Einzelheiten mit gleichen Bezugszeichen versehen wie in Figur 3.

Im Unterschied zur Ausführung nach Figur 3 umfassen die Vorspannmittel bei der Ausführung nach Figur 4 zwei Federelemente 17, 17', die einander diametral gegenüberliegend angeordnet sind. Die beiden Federelemente 17, 17' erstrecken sich vorliegend über eine Umfangserstreckung von etwa 90° um die Schwenkachse A4, ohne hierauf eingeschränkt zu sein. Ein Vorteil der vorliegenden Ausführungsform ist, dass sich hiermit größere Radialkräfte erzeugen lassen, was zu einer größeren Dämpfungswirkung führt. Dadurch, dass die Federelemente 17, 17' einander entgegengesetzt gerichtet sind, wirken die Kräfte symmetrisch auf die Lagerbuchse 29. In der in Figur 4A gezeigten Explosionsdarstellung sind die Lagerscheibe 30 und die Abschlussscheibe 21 in bereits montiertem Zustand gezeigt.

Für alle vorstehend beschriebenen Ausführungsformen besteht ein Vorteil darin, dass die Anordnung zwischen Grundkörper 3, Lagerbuchse 29 und hierauf schwenkbar gelagertem Spannarm 4 aufgrund der radialen Vorspannkraft der Vorspannmittel radial spielfrei ist. Insgesamt werden auf diese Weise gute Dämpfungseigenschaften bei gleichzeitig geringen Lagetoleranzen für die Spannarme 4, 6 erreicht. Durch geeignete Auswahl und Ausgestaltung der Vorspannmittel können die gewünschten Dämpfungseigenschaften der Riemenspannvorrichtung nach Bedarf angepasst werden.

### Bezugszeichenliste

- 2: Riemenspannvorrichtung
- 3: Grundkörper
- 4: erster Spannarm
- 5: erste Spannrolle
- 6: zweiter Spannarm
- 7: zweite Spannrolle
- 8: Federanordnung
- 9: Befestigungsabschnitt
- 10: Flanschvorsprung
- 11: Flanschabschnitt
- 12: Trägerabschnitt
- 13: Trägerabschnitt
- 14: Schraube
- 15: Hülsenabschnitt
- 16: Scheibe
- 17, 17': Vorspannmittel
- 18: Lager
- 19: Lagerabschnitt
- 20: Lagerabschnitt
- 21: Ringscheibe
- 22: Lager
- 23: Lager
- 24: Lager
- 25, 25': Bügelfeder
- 26, 26': Stützabschnitt
- 27, 27': Stützabschnitt
- 28, 28': Federabschnitt
- 29: Lagerbuchse
- 30: Lagerscheibe
- 31: Stützelement
- 32: Stützelement
- 33: Bohrung
- 34: Flanschabschnitt
- 35: Hülsenabschnitt
- 36: Bohrung

- 39: Stegabschnitt
- 40: Ausnehmung
- 41: Ringdichtung
- 42: Ringdichtung

- A: Achse

## Patentansprüche

1. Riemenspannvorrichtung umfassend:
einen Grundkörper (3) mit einem Hülsenansatz (15);
einen ersten Spannarm (4), der mittels einer Lagerbuchse (29) an dem Hülsenansatz (15) des Grundkörpers (3) um eine erste Schwenkachse (A4) schwenkbar gelagert ist und eine erste Spannrolle (5) aufweist, die um eine erste Drehachse (A5) drehbar ist, wobei die Lagerbuchse (29) mit einem der Teile Grundkörper und erster Spannarm (3, 4) drehfest verbunden und gegenüber dem anderen der Teile Grundkörper und dem Spannarm (4, 3) drehbar ist;
einen zweiten Spannarm (6), der an dem Grundkörper (3) um eine zweite Schwenkachse (A6) schwenkbar gelagert ist und eine zweite Spannrolle (7) aufweist, die um eine zweite Drehachse (A7) drehbar ist;
eine Federanordnung (8), welche derart zwischen dem ersten Spannarm (4) und dem zweiten Spannarm (6) angeordnet ist, dass der erste Spannarm (4) und der zweite Spannarm (6) mittels der Federanordnung (8) in Umfangsrichtung um die Schwenkachsen (A4, A6) gegeneinander vorgespannt sind; und **dadurch gekennzeichnet, dass** die Lagerbuchse (29) radial-elastisch gestaltet ist und die Riemenspannvorrichtung Vorspannmittel (17,17') aufweist, die radial zwischen einer Umfangsfläche der Lagerbuchse (29) und einer Umfangsfläche des mit der Lagerbuchse (29) drehfest verbundenen Teils (3, 4) angeordnet sind, um eine Radialkraft in Richtung dem relativ hierzu drehbaren Teil (4, 3) auszuüben.

2. Riemenspannvorrichtung nach Anspruch 1,
**dadurch gekennzeichnet,**
**dass** die Vorspannmittel (17, 17') zumindest ein Federelement aufweisen, das sich in Umfangsrichtung zwischen der Lagerbuchse (29) und dem hiermit drehfest verbundenen Teil (3, 4) erstreckt, insbesondere um eine Umfangserstreckung von mindestens 30° und/oder höchstens 90°.

3. Riemenspannvorrichtung nach Anspruch 1 oder 2,
**dadurch gekennzeichnet,**
**dass** die Vorspannmittel (17, 17') mindestens zwei Federelemente aufweisen, die über den Umfang verteilt angeordnet sind, wobei die Federelemente so angeordnet sind, dass die von den Federelementen generierten Radialkräfte einander zumindest teilweise aufheben.

4. Riemenspannvorrichtung nach Anspruch 3,
**dadurch gekennzeichnet,**
**dass** die Federelemente untereinander gleich gestaltet sind.

5. Riemenspannvorrichtung nach einem der Ansprüche 2 bis 4,
**dadurch gekennzeichnet,**
**dass** das mindestens eine Federelement in unmontiertem Zustand eine Krümmung aufweist, die von der Krümmung des mit der Lagerbuchse (29) drehfest verbundenen Teils (3, 4) abweicht.

6. Riemenspannvorrichtung nach einem der Ansprüche 1 bis 5,
**dadurch gekennzeichnet,**
**dass** die Vorspannmittel (17, 17') eine axiale Länge aufweisen, die mindestens der halben axialen Länge der Lagerbuchse (29) entspricht.

7. Riemenspannvorrichtung nach einem der Ansprüche 2 bis 6,
**dadurch gekennzeichnet,**
**dass** die Umfangsfläche des mit der Lagerbuchse (29) drehfest verbundenen Teils (3, 4) je Federelement eine Ausnehmung (40) aufweist, in der jeweils ein Federelement aufgenommen ist.

8. Riemenspannvorrichtung nach einem der Ansprüche 1 bis 7,
**dadurch gekennzeichnet,**
**dass** die Lagerbuchse (29) mit dem Grundkörper (3) drehfest verbunden ist, und der erste Spannarm (4) gegenüber der Lagerbuchse (29) drehbar ist.

9. Riemenspannvorrichtung nach einem der Ansprüche 1 bis 8,
**dadurch gekennzeichnet,**
**dass** der Hülsenansatz (15) des Grundkörpers (3) in der Außenumfangsfläche zumindest eine Ausnehmung (46) aufweist, die mit einem entsprechenden radialen Vorsprung (45) an der Innenumfangsfläche der ersten Lagerbuchse (29) zur Verdrehsicherung zusammenwirkt.

10. Riemenspannvorrichtung nach einem der Ansprüche 1 bis 9,
**dadurch gekennzeichnet,**
**dass** die Lagerbuchse (29) mehrere über den Umfang verteilte, sich in axiale Richtung erstreckende Schlitze (39) aufweist.

11. Riemenspannvorrichtung nach einem der Ansprüche 1 bis 10,
**dadurch gekennzeichnet,**
**dass** die Lagerbuchse (29) ein Kunststoffteil ist, insbesondere aus Polyamid.

12. Riemenspannvorrichtung nach einem der Ansprüche 1 bis 11,
**dadurch gekennzeichnet,**
**dass** die Federanordnung (8) zumindest eine Bügelfeder (25, 25') aufweist, die eine Umfangserstreckung (U25) von weniger als 360° um die erste und zweite Schwenkachse (A4, A6) aufweist.

13. Riemenspannvorrichtung nach Anspruch 12,
**dadurch gekennzeichnet,**
**dass** der Grundkörper (3) eine Öffnung (36) aufweist, die ausgestaltet ist, dass eine Antriebswelle und/oder Antriebsriemenscheibe eines Aggregats sich in die Öffnung (36) berührungslos hineinerstrecken kann.

## Claims

1. Belt tensioning device comprising:
a base member (3) having a sleeve projection (15);
a first tensioning arm (4), which is pivotably supported by a bearing sleeve (29) on the sleeve projection (15) of the base member (3) around a first pivot axis (A4) and which comprises a first tensioning roller (5) that is rotatable around a first axis of rotation (A5), wherein the bearing sleeve (29) is connected to one of the components base member and first tensioning arm (3, 4) in a rotationally fixed manner and is rotatable relative to the other one of the components base member and the tensioning arm (4, 3);
a second tensioning arm (6), which is pivotably supported on the base member (3) around a second pivot axis (A6) and which comprises a second tensioning roller (7) that is rotatable around a second axis of rotation (A7);
a spring arrangement (8) that is arranged between the first tensioning arm (4) and the second tensioning arm (6) such that the first tensioning arm (4) and the second tensioning arm (6) are pre-tensioned relative to each other in circumferential direction by the spring arrangement (8);
and **characterized in that** the bearing sleeve (29) is configured radially-elastic, and the belt tensioning device comprises pre-tensioning means (17, 17') that are arranged radially between a circumferential face of the bearing sleeve (29) and a circumferential face of the component (3, 4) connected to the bearing sleeve (29) in a rotationally fixed manner, to exert a radial force in direction toward the other component (4, 3) rotatable relative thereto.

2. Belt tensioning device according to claim 1,
**characterised in**
**that** the pre-tensioning means (17, 17') comprise at least one spring element that extends in circumferential direction between the bearing sleeve (29) and the component (3, 4) connected thereto in a rotationally fixed manner, in particular around a circumferential extension of at least 30º and/or at most 90º.

3. Belt tensioning device according to claim 1 or 2,
**characterised in**
**that** the pre-tensioning means (17, 17') comprise at least two spring elements that are arranged around the circumference, wherein the spring elements are arranged such that the radial forces generated by the spring elements cancel each other out at least partially.

4. Belt tensioning device according to claim 3,
**characterised in**
**that** the spring elements are designed equal to one another.

5. Belt tensioning device according to any of claims 2 to 4,
**characterised in**
**that** in the non-mounted condition the at least one spring element has a curvature that deviates from the curvature of the component (3, 4) connected to the bearing sleeve (29) in a rotationally fixed manner.

6. Belt tensioning device according to any of claims 1 to 5,
**characterised in**
**that** the pre-tensioning means (17, 17') have an axial length that corresponds to at least half the axial length of the bearing sleeve (29).

7. Belt tensioning device according to any of claims 2 to 6,
**characterised in**
**that** the circumferential face of the component (3, 4) connected to the bearing sleeve (29) in a rotationally fixed manner has a recess (40) for each spring element, in which recess respectively one spring element is accommodated.

8. Belt tensioning device according to any of claims 1 to 7,
**characterised in**
**that** the bearing sleeve (29) is rotationally fixedly connected to the base member (3), and that the first tensioning arm (4) is rotatable relative to the bearing sleeve (29).

9. Belt tensioning device according to any of claims 1 to 8,
**characterised in**
**that** the sleeve projection (15) of the base member (3) has at least one recess (46) in the outer circumferential face, which recess interacts with a corresponding radial projection (45) on the inner circumferential face of the first bearing sleeve (29) for locking against rotation.

10. Belt tensioning device according to any of claims 1 to 9,
**characterised in**
**that** the bearing sleeve (29) comprises several slots (39) distributed along the circumference and extending in axial direction.

11. Belt tensioning device according to any of claims 1 to 10,
**characterised in**
**that** the bearing sleeve (29) is a plastics component, in particular made from polyamide.

12. Belt tensioning device according to any of claims 1 to 11,
**characterised in**
**that** the spring arrangement (8) has at least one bow-shaped spring (25, 25') that has a circumferential extension (U25) of less than 360º around the first and the second pivot axis (A4, A6).

13. Belt tensioning device according to claim 12,
**characterised in**
**that** the base member (3) has an opening (36) formed such that a drive shaft and/or drive belt pulley of an auxiliary unit can extend into the opening (36) without contact.

## Revendications

1. Dispositif tendeur de courroie, comprenant :
un corps de base (3) pourvu d'un embout de manchon (15) ;
un premier bras tendeur (4) qui au moyen d'un coussinet (29) est logé sur l'embout de manchon (15) du corps de base (3) en étant susceptible de pivoter autour d'un premier axe de pivotement (A4) et qui comporte une première poulie de tension (5), qui est rotative autour d'un premier axe de rotation (A5), le coussinet (29) étant relié de manière solidaire en rotation avec l'une des pièces corps de base et premier bras tendeur (3, 4) et étant rotatif par rapport à l'autre des pièces corps de base et premier bras tendeur (4, 3) ;
un deuxième bras tendeur (6) qui est logé sur le corps de base (3) en étant susceptible de pivoter autour d'un deuxième axe de pivotement (A6) et qui comporte une deuxième poulie de tension (7), qui est rotative autour d'un deuxième axe de rotation (A7) ;
un ensemble de ressorts (8) lequel est placé entre le premier bras tendeur (4) et le deuxième bras tendeur (6), de telle sorte que le premier bras tendeur (4) et le deuxième bras tendeur (6) soient précontraints l'un contre l'autre au moyen de l'ensemble de ressorts (8) dans la direction périphérique autour de l'axe de pivotement (A4, A6) ;
et **caractérisé en ce que** le coussinet (29) est conçu en étant radialement élastique et **en ce que** le dispositif tendeur de courroie comporte des moyens de précontrainte (17, 17'), qui sont placés en direction radiale entre une surface périphérique du coussinet (29) et une surface périphérique de la pièce (3, 4) reliée de manière solidaire en rotation avec le coussinet (29), pour exercer une force radiale dans la direction de la pièce (4, 3) rotative par rapport à celui-ci.

2. Dispositif tendeur de courroie selon la revendication 1,
**caractérisé en ce que**
les moyens de précontrainte (17, 17') comportent au moins un élément à ressort qui s'étend dans la direction périphérique entre le coussinet (29) et la pièce (3, 4) reliée de manière solidaire en rotation avec celui-ci, notamment de la valeur d'une extension périphérique d'au moins 30° et/ou d'au plus 90°.

3. Dispositif tendeur de courroie selon la revendication 1 ou 2,
**caractérisé en ce que**
les moyens de précontrainte (17, 17') comportent au moins deux éléments à ressort qui sont placés en distribution sur la périphérie, les éléments à ressort étant placés de telle sorte que les forces radiales générées par les éléments à ressort s'annulent réciproquement au moins en partie.

4. Dispositif tendeur de courroie selon la revendication 3,
**caractérisé en ce que**
les éléments à ressort sont réciproquement de conception identique.

5. Dispositif tendeur de courroie selon l'une quelconque des revendications 2 à 4,
**caractérisé**
**en ce qu'**en position non montée, au moins un élément à ressort comporte une courbure qui diffère de la courbure de la pièce (3, 4) reliée de manière solidaire en rotation avec le coussinet (29).

6. Dispositif tendeur de courroie selon l'une quelconque des revendications 1 à 5,
**caractérisé en ce que**
les moyens de précontrainte (17, 17') présentent une longueur axiale qui correspond au moins à la demie longueur axiale du coussinet (29).

7. Dispositif tendeur de courroie selon l'une quelconque des revendications 2 à 6,
**caractérisé en ce que**
la surface périphérique de la pièce (3, 4) reliée de manière solidaire en rotation avec le coussinet (29) comporte pour chaque élément à ressort un évidement (40) dans lequel est logé respectivement un élément à ressort.

8. Dispositif tendeur de courroie selon l'une quelconque des revendications 1 à 7,
**caractérisé en ce que**
le coussinet (29) est relié de manière solidaire en rotation avec le corps de base (3) et le premier bras tendeur (4) est rotatif par rapport au coussinet (29).

9. Dispositif tendeur de courroie selon l'une quelconque des revendications 1 à 8,
**caractérisé en ce que**
sur la surface périphérique extérieure, l'embout de manchon (15) du corps de base (3) comporte au moins un évidement (46) qui coopère avec une saillie (45) radiale correspondante sur la surface périphérique intérieure du premier coussinet (29) pour bloquer la rotation.

10. Dispositif tendeur de courroie selon l'une quelconque des revendications 1 à 9,
**caractérisé en ce que**
le coussinet (29) comporte plusieurs fentes (39) distribuées sur la périphérie, s'étendant en direction axiale.

11. Dispositif tendeur selon l'une quelconque des revendications 1 à 10,
**caractérisé en ce que**
le coussinet (29) est une pièce en matière plastique, notamment en polyamide.

12. Dispositif tendeur de courroie selon l'une quelconque des revendications 1 à 11,
**caractérisé en ce que**
l'ensemble de ressorts (8) comporte au moins un ressort à étrier (25, 25') qui présente une extension périphérique (U25) de moins de 360° autour du premier et du deuxième axes de pivotement (A4, A6).

13. Dispositif tendeur de courroie selon la revendication 12,
**caractérisé en ce que**
le corps de base (3) comporte une ouverture (36) qui est conçue de telle sorte qu'un arbre d'entraînement et/ou une poulie d'entraînement d'un groupe puisse s'étendre sans contact à l'intérieur de l'ouverture (36) .
